# EUROPÄISCHE PATENTSCHRIFT

(11) **EP 3 542 914 B1**
(45) Veröffentlichungstag und Bekanntmachung des Hinweises auf die Patenterteilung: **23.06.2021**
(21) Anmeldenummer: 19162141.6
(22) Anmeldetag: 12.03.2019
(51) Int. Cl.: B07C 5/344, G01V 13/00

(54) **VERFAHREN UND VORRICHTUNG ZUR AUSSONDERUNG VON METALLHALTIGEN MATERIALIEN**
METHOD AND DEVICE FOR SEPARATING MATERIALS CONTAINING METAL
PROCÉDÉ ET DISPOSITIF D'ÉLIMINATION DES MATÉRIAUX CONTENANT DU MÉTAL

(30) Priorität: 20.03.2018 DE 102018106569; 06.09.2018 DE 102018121762
(43) Veröffentlichungstag der Anmeldung: 25.09.2019
(73) Patentinhaber: Sesotec GmbH, 94513 Schönberg (DE)
(72) Erfinder: Eichinger, Daniel, 94259 Kirchberg (DE)
(74) Vertreter: Glück Kritzenberger Patentanwälte PartGmbB

(56) Entgegenhaltungen:
- WO-A1-2012/045578
- US-A1- 2003 105 600

## Beschreibung

Die Erfindung betrifft ein Verfahren zum Aussondern von metallhaltigen Gegenständen unter Verwendung wenigstens eines Metalldetektors, der einen Detektionsbereich aufweist, durch den Produkte, z.B. Lebensmittel gefördert werden, wobei in Abhängigkeit von dem Messsignal des Metalldetektors eine Austragvorrichtung oder ein Austragsvorgang initiiert wird, ein als metallhaltig detektiertes Produkt auszusondern, wobei die Produkte in einer Auswerteeinrichtung des Metalldetektors als metallhaltig detektiert werden, wenn das aus dem Produkt erhaltene Messsignal wenigstens einen Referenzwert überschreitet, wobei das Messsignal die Phase und Amplitude eines Antwortsignals in Antwort auf wenigstens ein Erregungssignal enthält, das in wenigstens einer Detektionsspule des Metalldetektors erzeugt wird, welches Antwortsignal in Form einer zweidimensionalen Hüllkurve in einem Phasen/Amplituden Koordinatensystem gehandhabt wird, wobei die Phase und Amplitude wenigstens eines Produktexemplars gemessen und als Referenzbereich in Form einer zweidimensionalen Hüllkurve in einem Phasen/Amplituden Koordinatensystem gespeichert wird.

Bei dieser Metall-Fremdkörperdetektion insbesondere im Lebensmittel-Sektor ist es wichtig, möglichst kleine metallische Verunreinigungen zu detektieren. In jedem größeren Produktionsbetrieb gibt es definierte Anforderungen an die Detektionsempfindlichkeit. Diese werden durch Werksvorgaben definiert, oder ergeben sich aus den Vorgaben der Endkunden.

Jedes Material bzw. Produkt, das inspiziert wird, verursacht ein Signal im Metalldetektor. Dieses Signal ist abhängig von Masse, Form, Volumen, Temperatur und der elektrischen u. magnetischen Leitfähigkeit des Produktes. Das Metallsuchgerät ist in der Regel in der Lage diesen "Produkteffekt" zu unterdrücken. Jedoch wird die Empfindlichkeit der Metalldetektoren häufig hoch eingestellt, um auf jeden Fall Metall in den Produkten zu erfassen. Nun kann das Produktsignal (das Messsignal des Metalldetektors während des laufenden Betriebs) durch z.B. variierende Produkte, z.B. abweichende Zusammensetzung, Temperaturänderungen, etc., schwanken und als Metallsignal interpretiert werden. Dies ist eine sogenannte "Fehldetektion". Fehldetektionen bedeuteten immer Ausschleusung von Gutprodukten. Dieser Produktverlust verursacht bei den verarbeitenden Betrieben enorme Kosten.

Ein Verfahren gemäß dem Oberbegriff des Anspruchs 1 ist aus der US 2003/0105600 A1 bekannt. Die WO 2012/045578 A1 zeigt ein Verfahren, in welchem für unterschiedliche Metallpartikel die Detektionsempfindlichkeit durch Auswahl der Detektionsfrequenz mit dem besten Signalverhältnis Metallpartikel/Produkt optimiert wird. Die führt zu einer Erhöhung des Schlechtproduktanteils.

Es ist daher Aufgabe der Erfindung, den Ausschuss an Gutprodukten oder Material aufgrund der Metalldetektion zu verringern. Die Aufgabe wird erfindungsgemäße durch ein Verfahren gemäß Anspruch 1 und eine Vorrichtung gemäß Anspruch 7 gelöst. Vorteilhafte Weiterbildungen der Erfindung sind Gegenstand der zugeordneten abhängigen Ansprüche. Vorteilhafte Weiterbildungen der Erfindung sind auch in der Beschreibung und in der Zeichnung offenbart.

Erfindungsgemäß werden Amplituden- und Phasen-Daten unterschiedlich großer Metalltestkörper zur Bildung von Vektoren in dem Phasen/Amplituden-Koordinatensystem abgespeichert. Der Satz an Daten kann mit dem Aufbau einer Detektionsvorrichtung in einem Speicher der Auswertevorrichtung abgelegt werden.

Das Verfahren zeichnet sich weiterhin dadurch aus,
dass eine Sollgröße von Metallfremdkörpern als Erfassungsgrenze in den zu überprüfenden Produkten vorgegeben wird. Diese Größe kann zum, Beispiel eine Größe einer Metallverunreinigung sein, oder sich direkt auf eine Testkörpergröße beziehen.
Es wird dann der Vektor desjenigen Metalltestkörpers als Bezugsgröße ausgewählt, dessen Größe kleiner als die Sollgröße ist dessen Abstand zur Sollgröße am geringsten ist oder dessen Größe gleich der Sollgröße ist.

Daraufhin wird ein Erfassungsbereich für Gutprodukte definiert, dessen Grundlage der Referenzbereich bildet. Dieser Referenzbereich wird unter Durchführung insbesondere einer zentrischen Streckung des Referenzbereichs gebildet, so dass der größere Erfassungsbereich dieselbe Form wie der Referenzbereich aufweist, nur größer ist, da heißt: mathematisch ähnlich ist. Die zentrische Streckung erfolgt um einen Faktor entsprechend dem Verhältnis des Absolutwerts (Länge) des Vektors des ausgewählten Metalltestkörpers zu dem Wert des Referenzbereich in Richtung dieses Vektors. Dieser gegenüber dem Referenzbereich vergrößerte Erfassungsbereich bildet die Grenze zur Unterscheidung zwischen Gut- und Schlechtprodukten, wobei ein Produkt dann als Gutprodukt beurteilt wird, wenn sein Messsignal innerhalb des Erfassungsbereichs liegt.

Der Vorteil dieses Verfahrens gegenüber herkömmlichen Verfahren, bei denen der Referenzberiech evtl. unter Hinzufügung einer Toleranz für die Beurteilung von Gut/Schlechtprodukten verwendet wird, liegt darin, dass hier individuelle Anforderungen des Endkunden berücksichtigt werden können, die oft geringer sind als die produktorientierte Festlegung des Referenzbereichs plus einer eventuellen Toleranz.

Der Kunde oder Endkunde kann hier eine gewünschte Detektionsgenauigkeit angeben und über eine - vorzugsweise zugangsgeschützte - Eingabevorrichtung passt das erfindungsgemäße Verfahren den ursprünglichen Referenzbereich entsprechend der Länge des Vektors des passenden Testkörpers an die gewünschte Empfindlichkeit an, ohne irgendwelche Kalibrierungsvorgänge oder aufwändige Anpassungsmaßnahmen.

Das erfindungsgemäße Verfahren und Vorrichtung werden vor allem in der Lebensmittelindustrie eingesetzt, wo es je nach Art und Größe des zu inspizierenden Produkts unterschiedlichste Anforderungen an die Detektionsempfindlichkeit gibt und durch eine Qualitätssicherung überwacht werden.

Testkörperdaten sind einmal als Referenzwerte eingelernt und im Speicher jedes Geräts abgelegt. Erfindungsgemäß wird zur Ermittlung des Referenzbereichs wenigstens ein Testkörper als geforderte Detektionsempfindlichkeit vorgegeben. Auf diese Weise wird nicht mit der höchsten Detektionsempfindlichkeit gearbeitet, sondern mit einer den Produkterfordernissen angepassten Detektionsempfindlichkeit. Die Größe und Art des Testkörpers wird hierbei natürlich entsprechend dem zulässigen Metallgehalt im Produkt oder Material ausgewählt. Es können auch mehrere Testkörper verwendet werden, die unterschiedliche Metallsorten wiederspiegeln. Auf diese Weise wird der Metalldetektor oder die Auswerteeinrichtung auf eine Empfindlichkeit eingestellt, die dazu führt, dass die durch die Testkörper definierten Anforderungen an zulässigem Metallgehalt eingehalten werden, andererseits aber nicht Produkte ausgesondert werden, die zwar vom erzeugten Messsignal her über der möglichen Detektionsempfindlichkeit des Metalldetektors liegen, aber innerhalb des zulässigen Signalbereichs, wie er durch den oder die Testkörper definiert wird. Der Ausschuss durch unnötige Aussonderung an Gutprodukten wird somit deutlich verringert.

Die Vorgabe der geforderten Testkörper, also der Detektionsempfindlichkeit erfolgt vorzugsweise über die Benutzeroberfläche des Metalldetektors, wobei die Eingabemasken nur für autorisiertes Personal zugänglich sein dürfen. Dies kann erreicht werden durch Sicherung mittels Schlüsselschalter oder Passwortvergabe. Möglich sind auch Technologien mit Sender-Empfänger-Systemen zu automatischen und berührungslosen Identifizierung.

In einer vorteilhaften Weiterbildung der Erfindung wird in einer Kalibrierroutine zur Kalibrierung des Metalldetektors ein definierter Testkörper, vorzugsweise ein Eisen-Testkörper, durch den Metalldetektor gefördert, und die erhaltenen Signale werden mit den abgespeicherten Werten des entsprechenden Testkörpers verglichen und daraus ein Amplituden- und Phasenkorrekturwert (Offset-Wert) berechnet, welche auf die abgespeicherten Werte aller Testkörper angewandt werden. Auf diese Weise können die geometrischen Bedingungen des speziellen Metalldetektors berücksichtigt werden, wie z.B. Größe der Öffnung, durch die die Produkte gefördert werden.

Vorzugsweise wird diese Kalibrierroutine für jede Frequenz des Metalldetektors durchgeführt, so dass nicht nur die Größe sondern auch die unterschiedlichen Arbeitsfrequenzen des Metalldetektors abgedeckt werden.

Vorzugsweise erfolgt die Eingabe der Sollgröße in den Metalldetektor zugangsgeschützt, so dass eine Eingabe nur durch zugangsberechtigtes Fachpersonal erfolgen kann und somit das Risiko von Fehleingaben minimiert wird.

Vorzugsweise berücksichtigt der Faktor zusätzlich eine Sicherheitsspanne, um sicherzugehen dass die eingegebene Sollgröße auch unter Berücksichtigung von Toleranzen auf jeden Fall aussortiert wird. Vorzugsweise entspricht die Sicherheitsspanne ein Viertel bis ein Zwanzigstel, insbesondere ein Sechstel bis ein Zehntel der Amplitude des Absolutwerts des Vektors.

Die Größe des Erfassungsbereichs, also der aufgeweiteten Hüllkurve des Referenzbereichs und damit die Detektionsempfindlichkeit des Metalldetektors wird entsprechend des oder der vorgegebenen Testkörper festgelegt. Das Produkt wird als metallhaltig detektiert, wenn das Messsignal des Produkts die Hüllkurve an wenigstens einem Punkt berührt oder überschneidet. Der oder die Testkörper müssen in wenigstens einem Satz von Testkörpern unterschiedlicher Metallmaterialien und Größen in einem mit der Auswerteeinrichtung verbundenen Speicher abgelegt sein. Der Referenzwert wird somit in Abhängigkeit von dem Messsignal des Testkörpers, welches im Speicher hinterlegt ist, festgelegt. Dies führt zu einer einfachen Berücksichtigung der "Detektionsempfindlichkeit" in der anschließenden Signalaufbereitung.

Aus einem Satz unterschiedlicher großer Testkörper aus unterschiedlichen Metallen wird dann die Detektionsempfindlichkeit über den entsprechenden Testkörper ausgewählt. Da das Messsignal der Testkörper abhängig ist von der Größe der Durchlassöffnung des Metalldetektors, und diese wiederum je nach Applikation und zu inspizierenden Produkten unterschiedlich groß ausgeführt sein kann, ist eine Kalibrierung vorteilhaft. Dazu wird bei der Endkontrolle des Gerätes ein definierter Testkörper, vorzugsweise ein Eisen-Testkörper, mit einer Geschwindigkeit zwischen 0,1 und 1m/s, vorzugsweise aber mit 0,2-0,4m/s durch den Metalldetektor gefördert. In einer Kalibrierroutine werden die erhaltenen Signale, mit denen der im Speicher befindlichen Signale des vorgegebenen Eisen-Testkörpers verglichen und ein Amplituden- und Phasenoffset berechnet. Diese Offsetwerte sind nun auf alle im Speicher befindlichen Testkörpersignale anzuwenden. Das Verhalten der Testkörper ist abhängig von der Suchfrequenz. Deshalb muss diese Kalibrierroutine für jede verfügbare Suchfrequenz durchgeführt werden. Die Kalibrierung für die einzelnen Suchfrequenzen kann manuell durchgeführt werden, vorzugsweise aber durch einen in die Benutzeroberfläche integrierten softwaregestützten Kalibrier-Assistenten erfolgen.

Erfindungsgemäß ist Einsatz dieser Vorrichtung vor allem in der Lebensmittelindustrie, wo es je nach Art und Größe des zu inspizierenden Produkts unterschiedlichste Anforderungen an die Detektionsempfindlichkeit gibt und durch eine Qualitätssicherung überwacht werden. Diese geforderten Testkörper werden über die Benutzeroberfläche, welche im Sinne der Qualitätssicherung nur mit gültiger Identifizierung erreichbar ist, hinterlegt und der Metalldetektor wählt automatisch die Größe des Referenzbereiches um den Testkörper mit dem kleinsten Messsignal, mit einer zusätzlichen Sicherheitsspanne, gerade noch zu detektieren. Durch dieses Verfahren kann die Fehlausschleuserate z.B. durch wechselnde/schwankende Produktsignale reduziert werden.

Der Referenzbereich ist in Form einer Hüllkurve ausgebildet, der die Phase und die Amplitude des Messsignals wenigstens eines, vorzugsweise mehrerer Referenzprodukte enthält. Dieser Referenzbereich lässt sich gut auf einem Display einer Steuerung darstellen, die die Anlage zum Aussondern der metallhaltigen Materialien steuert.

Vorzugsweise wird die Senderspule gleichzeitig mit mehreren Anregungsfrequenzen betrieben und die frequenzspezifischen Amplituden- und Phasenwerte der Antwortsignale werden in eine einzige zweidimensionale Darstellung transformiert. Auf diese Weise können optimierte Frequenzen für die unterschiedlichen Materialien verwendet werden

Vorzugsweise wird der Referenzbereich hierbei als zweidimensionaler Referenzbereich mit Phase und Amplitude als Koordinaten des Bereichs dargestellt, und das Messsignal wird in diesem zweidimensionalen Referenzbereich dargestellt. Dies erlaubt auch eine optische Kontrolle der Tätigkeit des Metalldetektors.

Vorzugsweise wird der Testkörper entsprechend der Größe des Metalldetektors ausgewählt, was zu optimalen Ergebnissen führt.

Vorzugsweise wird der Erfassungsbereich derart eingestellt, dass dem Messsignal des Testkörpers, abzüglich einer Sicherheitsspanne entspricht. Hierdurch wird sichergestellt, dass auch das Messsignals des vorgegebenen Testkörpers, welcher das Messsignal mit der geringsten Amplitude liefert, sicher als metallhaltig erkannt wird. Die Sicherheitsspanne muss entsprechend groß gewählt werden. Vorzugsweise beträgt sie ein Viertel bis ein Zwanzigstel, insbesondere ein Sechstel bis ein Zehntel der Amplitude des Messsignals des Testkörpers. Die führt einerseits zu einer sicheren Erkennung aber andererseits zu einem geringen Ausschuss, der umso höher ist, desto größer die Sicherheitsspanne ist.

Vorzugsweise werden drei insbesondere kugelförmige Testkörper aus Metall verwendet werden, nämlich, ein Eisenkörper, ein Nicht-Eisenkörper und ein Edelstahlkörper. Die Größe der Testkörper ist definiert nach Kundenvorgaben, die sicherstellen, dass gewisse Größen von Metallverunreinigungen im Produkt nicht überschritten werden. In der zweidimensionalen Darstellung des Referenzbereichs bilden die Messsignale der drei Testköper in der oben genannten zweidimensionalen Darstellung des Referenzbereichs Vektoren, deren Betrag den Referenzbereich in verschieden Richtungen überschreiten.

Das erfindungsgemäße Verfahren wird vorzugsweise im Bereich der Qualitätskontrolle, Lebensmittelüberwachung oder des Materialrecyclings eingesetzt, um metallhaltige Fremdstoffe wirkungsvoll abzusondern, wobei nur eine geringe Fehldetektion stattfindet.

Die Erfindung betrifft auch eine Vorrichtung zur Detektion und Aussonderung von metallhaltigen Stoffen aus Produkten insbesondere geeignet zur Durchführung eines Verfahrens nach einem der vorhergehenden Ansprüche, umfassend
- einen Metalldetektor, der einen Detektionsbereich aufweist, durch den Produkte, z.B. Lebensmittel förderbar sind,
- eine Auswertevorrichtung zur Ermittlung von unerwünschten Fremdstoffen in den Produkten, welche konzipiert ist, vom Metalldetektor ein Messsignal beim Durchgang eines Produkts durch den Detektionsbereich zu erhalten,
- eine durch die Auswertevorrichtung in Abhängigkeit vom Messsignal ansteuerbare Austragsvorrichtung, die konzipiert ist, ein als metallhaltig detektiertes Produkt auszusondern,
- wobei die Auswertevorrichtung eine Anlernschaltung und einen Speicher aufweist, die konzipiert sind, die Phase und Amplitude wenigstens eines Produktexemplars als Referenzbereich in Form einer zweidimensionalen Hüllkurve in einem Phasen/Amplituden Koordinatensystem zu speichern. Diese Festlegung des Referenzbereich kann zum Beispiel erfolgen ,wenn ein neues Produkt verwendet wird, indem die Messsignale einer oder mehrerer Referenzprodukte erfasst werden und zur Bildung eines Referenzbereichs verwendet werden. Alternativ kann der Referenzbereich auch in Form eines Datensatze in einen Speicher der Vorrichtung abgelegt werden. Die Auswertevorrichtung enthält weiterhin:
- einen Referenzwertspeicher, in welchem Amplituden- und Phasen-Werte unterschiedlich großer Metalltestkörper abgespeichert sind, die Vektoren in dem Phasen/Amplituden-Koordinatensystem bilden,
- eine Eingabeanordnung zur Eingabe einer Sollgröße von Metallfremdkörpern als Erfassungsgrenze in den zu überprüfenden Produkten,
- wobei die Auswertevorrichtung weiterhin eine Auswahlschaltung aufweist, die konzipiert ist, den Vektor desjenigen Metalltestkörpers als Bezugsgröße auszuwählen, dessen Größe kleiner oder gleich der Sollgröße ist und dessen Abstand zur Sollgröße am geringsten ist. Wenn somit 3mm große Metallfremdstoffe erkannt werden sollen, wird entsprechend der Vektor der Eisen-Testkugel für 3mm verwendet.

Die Auswertevorrichtung weist eine Anpassungsschaltung auf, die konzipiert ist, den Referenzbereich um einen Faktor korrespondierend dem Verhältnis des Absolutwerts (Länge) des Vektors des ausgewählten Metalltestkörpers zu dem Wert des Referenzbereich in Richtung dieses Vektors zu vergrößern, welche Vergrößerung unter Beibehaltung der Form der Hüllkurve des Referenzbereichs erfolgt. Die Vergrößerung erfolgt insbesondere durch eine zentrische Streckung mit dem errechneten Faktor, wobei die Form der Hüllkurve des Referenzbereichs erhalten bleibt.

Weiterhin weist die Auswertevorrichtung eine Vergleichsschaltung auf, die konzipiert ist, ein Aussonderungssignal für die Aussonderungsvorrichtung in Abhängigkeit davon abzugeben, ob das Messsignal eines Produkts innerhalb des Erfassungsbereichs liegt oder nicht. Auf diese Weise wird die Vorrichtung in einfacher und sicherer Weise auf die geforderte Detektionsempfindlichkeit eingestellt und der Anteil an Schlechtprodukten kann entsprechend verringert werden.

Vorzugsweise enthält die Auswerteeinrichtung eine Referenzschaltung, die konzipiert ist, aus dem Messsignal des wenigstens eines (Referenz)Produktes einen Referenzbereich abzuleiten, der insbesondere die Phase und die Amplitude des Messsignals umfasst. Vorzugsweise werden mehrere (Referenz)Produkte verwendet, wodurch in der Frequenz und Phase unterschiedliche Vektoren als Messsignal erhalten werden, die den Referenzbereich umschließen.
Vorzugsweise enthält die Vorrichtung und/oder Auswerteeinrichtung ein Display und ist konzipiert, den Referenzbereich und das Messsignal zweidimensional auf dem Display darzustellen, wobei insbesondere die Phase und die Amplitude des Messsignals die Ordinate und Abszisse der zweidimensionalen Darstellung auf dem Display bilden.

Vorzugsweise ist die Austragvorrichtung durch Ausblasdüsen oder einen Austragstempel gebildet, der Material quer zur Förderrichtung ausstößt. Auf diese Weise können leicht Produkte oder Material ausgesondert werden, das als metallhaltig detektiert worden ist.

Der Metalldetektor kann als Detektionsspulen eine oder mehrere Senderspulen und mindestens zwei Empfängerspulen aufweisen.

Vorzugsweise ist die Fördervorrichtung konzipiert, in einem Förderbereich einen Materialstrom definierter Breite zu erzeugen. Die Breite des Detektionsbereichs erstreckt sich über die gesamte Breite des Materialstroms.

So hat vorzugsweise der wenigstens eine Metalldetektor einen Detektionsbereich mit einer Länge in Förderrichtung von 10 cm bis 100 cm, insbesondere 30cm bis 50 cm. Diese Länge des Detektionsbereichs ist insbesondere für die Lebensmittelüberwachung gut geeignet, wo in der Regel ganze Produktpackungen ausgesondert werden müssen.

Vorzugsweise enthält die Steuerung und/oder Auswerteeinrichtung eine Verzögerungsschaltung, die die Strecke von dem Detektionsbereich bis zur Austragsvorrichtung und die Fördergeschwindigkeit bei der Betätigung der Austragvorrichtung berücksichtigt. Auf diese Weise kann die Betätigung der Austragsvorrichtung gen auf den Materialbereich eingegrenzt werden, in welchem das Metall detektiert wurde.

Vorzugsweise hat der Metalldetektor als Detektionsspule wenigstens eine die Förderstrecke umgebende Senderspule und zwei Empfängerspulen, die in Förderrichtung vor und hinter der Senderspule angeordnet sind. Die Senderspule arbeitet insbesondere mit einer Frequenz von 16 bis 1000 kHz. Die Empfängerspulen sind gegenläufig in Serie geschaltet, so dass sich deren Induktionsspannung aufhebt. Jeder metallhaltige Gegenstand, der durch die Spulen gefördert wird, verändert dieses Gleichgewicht. Dies äußert sich einem Messsignal, dass eine gewisse Amplitude und eine gewisse Phase zum Sendersignal aufweist. 6 Es ist auch möglich, mehrere Anregungsfrequenzen für die Senderspule des Metalldetektors zu verwenden, z.B. eine erste im Bereich von 30-300 kHz und wenigstens eine zweite im Bereich von 200 bis 900 kHz. Die frequenzspezifischen Phasen- und Amplitudenwerte aus den unterschiedlichen Anregungsfrequenzen werden dann in eine einzige zweidimensionale Darstellung transferiert. Auf diese Weise können Edelstahl und allgemein NE-Metalle besser erkannt werden, weil diese bei höheren Frequenzen ein deutlicheres Signal als bei niedrigeren Frequenzen zeigen, während Eisen und dessen Legierungen bei niedrigeren Frequenzen ein besseres Signal liefern. Somit wird durch die gleichzeitige Verwendung zweier unterschiedlicher Frequenzen der Senderspule den spezifischen Signalantworten der unterschiedlichen Materialien Rechnung getragen. Es ist somit eine optimierte Erkennung von Eisen als auch von Nichteisen-Metallen möglich.

Aufgrund der Erfindung ist es nun möglich, dass sich das Metallsuchsystem automatisch auf eine definierte Detektionsempfindlichkeit zurückregelt, welche gerade noch ausreicht, um die geforderten Empfindlichkeiten zu erreichen. Der Vorteil dieses Verfahrens liegt auf der einen Seite darin, dass eine reduzierte Störempfindlichkeit/höhere Betriebsstabilität des Gesamtsystems erreicht werden kann und auf der anderen Seite automatisch und ohne langwierige ,try- and-error' Versuche eine optimale Empfindlichkeitseinstellung gefunden wird.

Die Auswerteeinrichtung kann in der Steuerung integriert sein. Die vorstehend genannten Verfahrens- und Vorrichtungsmerkmale können beliebig miteinander kombiniert werden. Vorzugsweise weist die Auswertevorrichtung eine Kalibrierschaltung auf, die konzipiert ist zur Durchführung einer Kalibrierroutine zur Kalibrierung des Metalldetektors, welche Kalibierschaltung konzipiert ist, des Messsignal eines durch den Metalldetektor geförderten definierten Testkörpers mit den abgespeicherten Werten (Vektoren) des entsprechenden Testkörpers zu vergleichen und daraus einen Amplituden- und Phasenkorrekturwert (Offset-Wert) zu berechnen, welche auf die abgespeicherten Werte aller Testkörper angewandt wird. Auf diese Weise kann der Geometrie der vorliegenden Anlage (Fertigungstoleranzen, unterschiedliche Größe des Detektionsbereichs) Rechnung getragen werden und die Daten für die Testkörper brauchen nicht für jedes Gerät bestimmt zu werden.

Vorzugsweise enthält die Vorrichtung eine Fördervorrichtung, die konzipiert ist, die Produkte durch den Detektionsbereich zu transportieren. Daher werden die Produkte mit einer definierten Geschwindigkeit durch den Detektionsbereich gefördert und liefern somit reproduzierbare Messsignale.

Vorzugsweise sind die zu detektierenden Produkte auf einem Förderband angeordnet, welches durch die Senderspule des Metalldetektors hindurchläuft. Nach Erkennung eines Fremdkörpers kann das zugehörige Produkt dann wahlweise durch eine Aussonderungsvorrichtung, z.B. einen Ausleitschieber aus dem Materialstrom entfernt, d.h. vom Förderband heruntergestoßen werden. Es ist andererseits auch möglich, nach Erkennen des Metall-Fremdkörpers das Förderband lediglich zu stoppen, so dass eine Aufsichtsperson das Produkt vom Förderband entnehmen kann.

Folgende Ausdrücke werden synonym verwendet: Referenzbereich - Hüllkurve aufgrund Messsignale von wenigstens einem, vorzugsweise mehreren Referenzprodukten.

Die Erfindung wir nachfolgend kurz anhand der schematischen Zeichnung beschrieben. In dieser zeigen:
- Fig. 1: eine seitliche Darstellung einer Aussonderungsvorrichtung,
- Fig. 2: eine Darstellung der Aussonderungsvorrichtung aus Fig. 1 von oben,
- Fig. 3: eine zweidimensionale Darstellung des Messsignals und des zulässigen Referenzbereichs,
- Fig. 4: eine Darstellung des Referenzbereichs und der Messsignale dreier Testkörper nach dem Stand der Technik,
- Fig. 5: eine Darstellung des Referenzbereichs und der Messsignale dreier Testkörper gemäß der Erfindung, und
- Fig. 6: eine Vergrößerung VI aus Fig. 5.

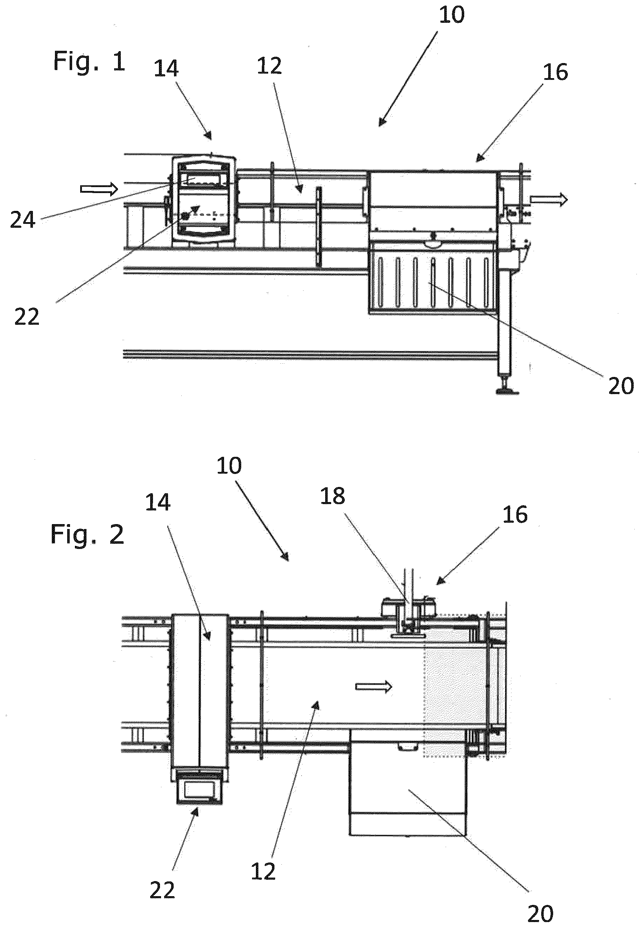

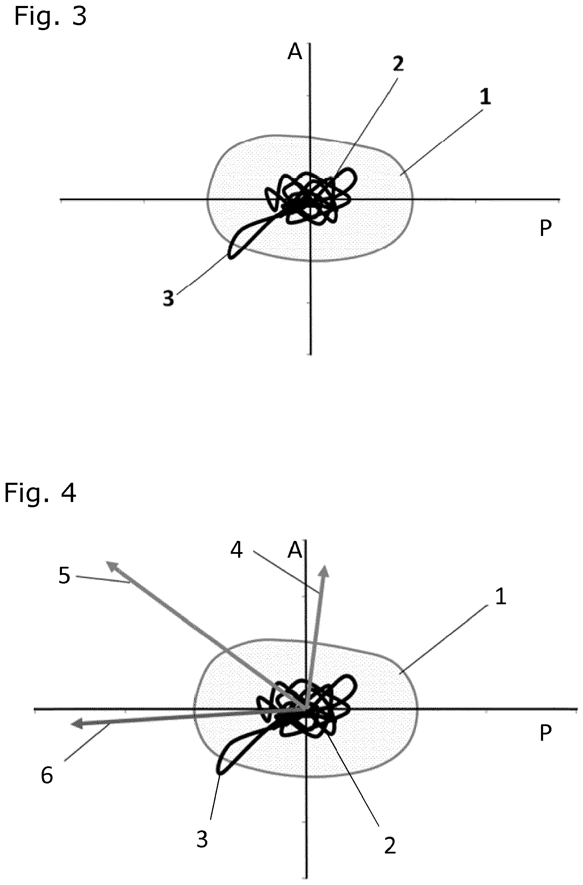

Figur 1 und 2 zeigen eine Vorrichtung 10 zum Aussondern von metallhaltigen Gegenständen aus Produkten wie z.B. Lebensmittelpackungen, Schüttgütern etc., auch zum Maschinenschutz. Die Aussonderungsvorrichtung 10 enthält ein Förderband 12, dessen Laufrichtung mit Pfeilen gekennzeichnet ist. Das Förderband ist von einem Metalldetektor 14 umgeben, der wenigstens eine Senderspule und wenigstens zwei Empfängerspulen enthält, die das Förderband 12 umgeben. Dem Metalldetektor ist eine Austragsvorrichtung 16 nachgeordnet, die einen Austragsstempel 18 enthält, der ein fehlerhaftes Produkt quer zur Förderrichtung in einen Entsorgungsbehälter 20 ausstößt. Die Vorrichtung enthält eine Steuerung 22, die eine Auswerteeinrichtung zur Signalaufbereitung des Messsignals vom Metalldetektor enthält. Die Steuerung und die Auswerteeinrichtung können jedoch separat vorgesehen sein. Die Auswerteeinrichtung und/oder Steuerung 22 enthält ein Display 24, auf dem das aktuelle Messsignal des Metalldetektors 14 als zweidimensionale Darstellung Amplitude A über die Phase (360 Grad) P dargestellt ist. Die Darstellung auf dem Display 24 ist in den nachfolgenden Figuren 3 bis 6 gezeigt.

Figur 3 zeigen die Darstellung eines Messsignals 2 über die Amplitude A und die Phase P während der Tätigkeit der Vorrichtung. Das Messsignal 2 ist ein typisches Messsignal z.B. für ein Nahrungsmittel. Es ergibt sich aus der Amplitude und dem Phasenversatz des Signals der Empfängerspule zur Sendespule. Die Hüllkurve 1 zeigt den Referenzbereich, innerhalb dessen sich das Messsignal 2 befinden darf. Der Referenzbereich wird aus mehreren Messungen von Referenzprodukten gewonnen. Bewegt sich im Betrieb der Vorrichtung sich das Messsignal aus der Hüllkurve heraus, wie das durch das Bezugszeichen 3 dargestellt ist, wird dies von der Auswerteeinrichtung als "Metallfremdkörper" interpretiert. In diesem Beispiel wäre dies eine Fehldetektion aufgrund Temperaturschwankungen im Fertigungsprozess des Nahrungsmittels.

In Fig. 4 werden die Messsignale 4, 5, und 6 von drei Testkugeln gezeigt, welche eine geforderte/vorgegebene Detektionsempfindlichkeit darstellen. Die Messsignale 4, 5 und 6 bilden Vektoren in der zweidimensionalen Darstellung Amplitude/Phase der Messsignale. Wenn somit der Kunde/Endkunde eine geringere Auflösung bzw. reduzierte Detektionsgenauigkeit haben will, gibt er eine Größe der Fremdkörper (Eisen - Edelmetall - andere Metalle) vor, die noch erkannt werden sollen. In dem Referenzwertspeicher sind mehrere Vektoren entsprechend unterschiedlichen Testkörpern abgelegt, wie der Vektor 4 für eine Nicht-Eisenkugel von 2mm Durchmesser, der Vektor 5 für eine Eisenkugel von 3mm Durchmesser und der Vektor 6 für eine Edelstahlkugel von 3mm Durchmesser.

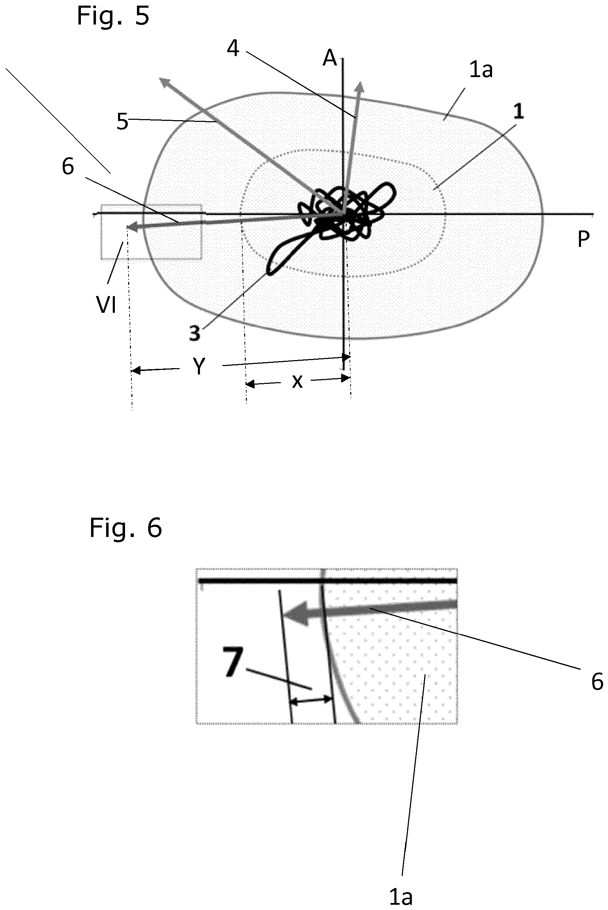

Der Erfassungsbereich 1a, der bestimmt, ob ein Produkt im Betrieb der Vorrichtung als Gutprodukt oder Schlechtprodukt klassifiziert wird, wird bestimmt durch zentrische Streckung des Referenzbereichs 1 um einen Faktor Y7x der Länge des Vektors 6 Y geteilt durch die Erstreckung des Erfassungsbereichs x in Richtung des Vektors 6. Auf diese Weise wird ein zum Referenzbereich 1 formgleicher Erfassungsbereich gebildet, der aber wesentlich größer als der Referenzbereich ist, wodurch erheblich mehr Produkte als Gutprodukte klassifiziert werden. Im erfindungsgemäßen Verfahren gemäß Fig. 5 und 6 wird die Größe des Erfassungsbereichs 1a also durch die so durchgeführte Erweiterung automatisch bestimmt. Auf diese Weise würde der Erfassungsbereich sich bis zur Vektorspitze erstrecken. Vorzugsweise wird jedoch der erhaltene Faktor um eine Sicherheitsspanne verringert oder von dem Faktor wird eine Sicherheitspanne 7 abgezogen, so dass nach der zentrischen Streckung des Referenzbereichs 1 der Vektor 6 mit einer Sicherheitsspanne 7 (Fig. 6) über den Erfassungsbereich 1a hinausragt. Man erkennt, dass dieser nun deutlich größer ist als der vorherige Referenzbereich 1 nach dem Stand der Technik gemäß Fig. 4. Trotzdem werden noch alle drei Testkugeln entsprechend den Vektoren 4, 5 und 6 sicher detektiert. Das gültige Produktsignal 3 aus Fig. 4, welches im Stand der Technik noch fälschlicherweise als "Metall" interpretiert wurde, wird nun als Gutprodukt angesehen.

Fig. 6 zeigt die Sicherheitsspanne 7, die eingehalten wird, damit die Anforderungen sicher detektiert werden. Die Sicherheitsspanne beträgt vorzugsweise einen kleineren Teil des Vektorbetrages 6, z.B. ein Fünftel bis ein Zwanzigstel des Vektorbetrages 6.

## Patentansprüche

1. Verfahren zum Aussondern von metallhaltigen Gegenständen unter Verwendung wenigstens eines Metalldetektors (14), der einen Detektionsbereich aufweist, durch den Produkte, z.B. Lebensmittel gefördert (12) werden, wobei in Abhängigkeit von dem Messsignal (2) des Metalldetektors (14) eine Austragvorrichtung (18) oder ein Austragsvorgang initiiert wird, ein als metallhaltig detektiertes Produkt auszusondern, wobei die Produkte in einer Auswerteeinrichtung des Metalldetektors (14) als metallhaltig detektiert werden, wenn das aus dem Produkt erhaltene Messsignal wenigstens einen Referenzwert überschreitet, wobei das Messsignal (2) die Phase und Amplitude eines Antwortsignals in Antwort auf wenigstens ein Erregungssignal enthält, das in wenigstens einer Detektionsspule des Metalldetektors (14) erzeugt wird, welches Antwortsignal in Form einer zweidimensionalen Hüllkurve (1) in einem Phasen/Amplituden Koordinatensystem gehandhabt wird,
wobei die Phase und Amplitude wenigstens eines Produktexemplars gemessen und als Referenzbereich in Form einer zweidimensionalen Hüllkurve (1) in einem Phasen/Amplituden Koordinatensystem gespeichert wird,
**dadurch gekennzeichnet,**
**dass** der Amplituden- und Phasen-Wert unterschiedlich großer Metalltestkörper zur Bildung von Vektoren (4,5,6) in dem Phasen/Amplituden-Koordinatensystem abgespeichert werden,
**dass** eine Sollgröße von Metallfremdkörpern als Erfassungsgrenze in den zu überprüfenden Produkten vorgegeben wird,
**dass** der Vektor (4,5,6) desjenigen Metalltestkörpers als Bezugsgröße ausgewählt wird, dessen Größe kleiner oder gleich der Sollgröße ist und dessen Abstand zur Sollgröße am geringsten ist, dass ein Erfassungsbereich (1a) für Gutprodukte durch eine Aufweitung des Referenzbereich (1) gebildet wird, welcher vergrößert wird um einen Faktor (Y/x) entsprechend dem Verhältnis des Absolutwerts (Y) des Vektors (4,5,6) des ausgewählten Metalltestkörpers zu der Erstreckung (x) des Referenzbereich (1) in Richtung dieses Vektors (4,5,6), welcher Erfassungsbereich (1a) eine Bezugsgröße zur Unterscheidung zwischen Gut- und Schlechtprodukten bildet, wobei ein Produkt dann als Gutprodukt beurteilt wird, wenn sein Messsignal innerhalb des Erfassungsbereichs (1a) liegt.

2. Verfahren nach Anspruch 1, **dadurch gekennzeichnet, dass** in einer Kalibrierroutine zur Kalibrierung des Metalldetektors (14) ein definierter Testkörper, vorzugsweise ein Eisen-Testkörper, durch den Metalldetektor (14) gefördert wird, und die erhaltenen Signale mit den abgespeicherten Werten des entsprechenden Testkörpers verglichen und daraus ein Amplituden- und Phasenkorrekturwert (Offset-Wert) berechnet wird, welche auf die abgespeicherten Werte aller Testkörper angewandt werden.

3. Verfahren nach Anspruch 2, **dadurch gekennzeichnet, dass** die Kalibrierroutine für jede Frequenz des Metalldetektors (14) durchgeführt wird.

4. Verfahren nach einem der vorhergehenden Ansprüche, **dadurch gekennzeichnet, dass** die die Eingabe der Sollgröße in den Metalldetektor (14) zugangsgeschützt erfolgt.

5. Verfahren nach einem der vorhergehenden Ansprüche, **dadurch gekennzeichnet, dass** der Faktor zusätzlich eine Sicherheitsspanne (7) berücksichtigt.

6. Verfahren nach Anspruch 5, **dadurch gekennzeichnet, dass** die Sicherheitsspanne (7) ein Viertel bis ein Zwanzigstel, insbesondere ein Sechstel bis ein Zehntel der Amplitude des Absolutwerts des Vektors (4,5,6) entspricht.

7. Vorrichtung (10) zur Detektion und Aussonderung von metallhaltigen Stoffen aus Produkten insbesondere geeignet zur Durchführung eines Verfahrens nach einem der vorhergehenden Ansprüche, umfassend
- einen Metalldetektor (14), der einen Detektionsbereich aufweist, durch den Produkte, z.B. Lebensmittel förderbar sind,
- eine Auswertevorrichtung zur Ermittlung von unerwünschten Fremdstoffen in den Produkten, welche konzipiert ist, vom Metalldetektor (14) ein Messsignal beim Durchgang eines Produkts durch den Detektionsbereich zu erhalten,
- eine durch die Auswertevorrichtung in Abhängigkeit vom Messsignal ansteuerbare Austragsvorrichtung (18), die konzipiert ist, ein als metallhaltig detektiertes Produkt auszusondern,
- wobei die Auswertevorrichtung eine Anlernschaltung und einen Speicher aufweist, die konzipiert sind, die Phase und Amplitude wenigstens eines Produktexemplars als Referenzbereich in Form einer zweidimensionalen Hüllkurve (1) in einem Phasen/Amplituden Koordinatensystem zu speichern,
**gekennzeichnet durch**
- einen Referenzwertspeicher, in welchem Amplituden- und Phasen-Werte unterschiedlich großer Metalltestkörper abgespeichert sind, die Vektoren (4,5,6) in dem Phasen/Amplituden-Koordinatensystem bilden,
- eine Eingabeanordnung zur Eingabe einer Sollgröße von Metallfremdkörpern als Erfassungsgrenze in den zu überprüfenden Produkten,
- wobei die Auswertevorrichtung weiterhin eine Auswahlschaltung aufweist, die konzipiert ist, den Vektor (4,5,6) desjenigen Metalltestkörpers als Bezugsgröße auszuwählen, dessen Größe kleiner oder gleich der Sollgröße ist und dessen Abstand zur Sollgröße am geringsten ist,
- dass die Auswertevorrichtung eine Anpassungsschaltung aufweist, die konzipiert ist, den Referenzbereich (1) zur Bildung eines Erfassungsbereichs (1a) um einen Faktor (Y/x) korrespondierend dem Verhältnis des Absolutwerts (Y) des Vektors (4,5,6) des ausgewählten Metalltestkörpers zu der Erstreckung (x) des Referenzbereichs in Richtung dieses Vektors (4,5,6) zu vergrößern, welche Vergrößerung unter Beibehaltung der Form der Hüllkurve(1) des Referenzbereichs (1) erfolgt,
- wobei die Auswertevorrichtung eine Vergleichsschaltung aufweist, die konzipiert ist, ein Aussonderungssignal für die Aussonderungsvorrichtung (10) in Abhängigkeit davon abzugeben, ob das Messsignal eines Produkts innerhalb des Erfassungsbereichs (1a) liegt oder nicht.

8. Vorrichtung nach Anspruch 7, **dadurch gekennzeichnet, dass** die Auswerteeinrichtung mit einem Display (24) der Vorrichtung verbunden ist und konzipiert ist, die den Referenzbereich (1) repräsentierende Hüllkurve (1) auf dem Display (24) darzustellen, und dass die Auswerteeinrichtung konzipiert ist, das Messsignal eines in Prüfung befindlichen Produktes auf dem Display (24) anzuzeigen und ein Metall-Fremdkörper-Signal abzuleiten, wenn die geschlossene Hüllkurve (1) durch das Produkt-Messsignal berührt oder überschritten wird.

9. Vorrichtung nach Anspruch 8, **dadurch gekennzeichnet, dass** der Metalldetektor (14) konzipiert ist, die Detektionsspule mit wenigstens zwei unterschiedlichen Frequenzen anzuregen.

10. Vorrichtung nach einem der Ansprüche 7 bis 9, **dadurch gekennzeichnet, dass** die Auswertevorrichtung eine Kalibrierschaltung aufweist, die konzipiert ist zur Durchführung einer Kalibrierroutine zur Kalibrierung des Metalldetektors (14), welche Kalibierschaltung konzipiert ist, des Messsignal eines durch den Metalldetektor (14) geförderten definierten Testkörpers mit den abgespeicherten Werten des entsprechenden Testkörpers zu vergleichen und daraus einen Amplituden- und Phasenkorrekturwert (Offset-Wert) zu berechnen, welche auf die abgespeicherten Werte aller Testkörper angewandt wird.

11. Vorrichtung nach einem der Ansprüche 7 bis 10, **dadurch gekennzeichnet, dass** sie eine Fördervorrichtung (12) enthält, die konzipiert ist, die Produkte durch den Detektionsbereich zu transportieren.

12. Vorrichtung nach einem der Ansprüche 11, **dadurch gekennzeichnet, dass** die Austragvorrichtung durch Ausblasdüsen oder einen Austragstempel (18) gebildet ist, der Material quer zur Förderrichtung ausstößt.

13. Vorrichtung nach einem der Ansprüche 11 bis 12, **dadurch gekennzeichnet, dass** der Metalldetektor (14) und/oder Auswerteeinrichtung eine Verzögerungsschaltung aufweist, die die Strecke von dem Detektionsbereich bis zur Austragsvorrichtung (18) und die Fördergeschwindigkeit bei der Betätigung der Austragvorrichtung (18) berücksichtigt.

14. Vorrichtung nach einem der Ansprüche 11 bis 13, **dadurch gekennzeichnet, dass** der Metalldetektor (14) als wenigstens eine Detektionsspule wenigstens eine die Förderstrecke (12) umgebende Senderspule und zwei die Förderstrecke umgebende Empfängerspulen enthält, die in Förderrichtung vorzugsweise vor und hinter der Senderspule angeordnet sind.

15. Vorrichtung nach einem der Ansprüche 7 bis 14, **dadurch gekennzeichnet, dass** die Eingabeanordnung eine Zugangssicherung aufweist.

## Claims

1. Method for separating metal-containing objects using at least one metal detector (14) which has a detection area through which products, e.g. foodstuffs (12) are conveyed, wherein in dependence on the measurement signal (2) of the metal detector (14) a discharge device (18) or a discharge process is initiated to discharge a product detected as containing metal, wherein in an evaluation device of the metal detector (14) the products are detected as containing metal if the measurement signal obtained from the product exceeds at least one reference value, the measurement signal (2) containing the phase and amplitude of a response signal in response to at least one excitation signal generated in at least one detection coil of the metal detector (14), which response signal is handled in the form of a two-dimensional envelope curve (1) in a phase/amplitude coordinate system wherein the phase and amplitude of at least one product sample is measured and stored as a reference range in the form of a two-dimensional envelope curve (1) in a phase/amplitude coordinate system,
**characterized in**
**in that** the amplitude- and phase values of metal test specimens of different sizes are stored in the phase/amplitude coordinate system to form vectors (4, 5, 6),
**in that** a setpoint size of metal foreign bodies is specified as a detection limit in the products to be tested,
**in that** the vector (4, 5, 6) of that metal test body whose size is smaller than or equal to the setpoint size and whose distance from the setpoint size is the smallest is selected as the reference size,
**in that** a detection region (1a) for good products is formed by widening the reference region (1), which is enlarged by a factor (Y/x) corresponding to the ratio of the absolute value (Y) of the vector (4, 5, 6) of the selected metal test body to the extension (x) of the reference region (1) in the direction of this vector (4, 5,6), which detection range (1a) forms a reference value for distinguishing between good and bad products, a product being judged to be a good product if its measurement signal lies within the detection range (1a).

2. Method according to claim 1, **characterized in that**, in a calibration routine for calibrating the metal detector (14), a defined test body, preferably an iron test body, is conveyed through the metal detector (14), and the signals obtained are compared with the stored values of the corresponding test body and an amplitude- and phase correction value (offset value) are calculated therefrom, which are applied to the stored values of all test bodies.

3. Method according to claim 2, **characterized in that** the calibration routine is performed for each frequency of the metal detector (14).

4. Method according to one of the preceding claims, **characterized in that** the input of the setpoint size into the metal detector (14) is carried out in an access-protected manner.

5. Method according to one of the preceding claims, **characterized in that** the factor additionally takes into account a safety margin (7).

6. Method according to claim 5, **characterized in that** the safety margin (7) corresponds to one quarter to one twentieth, in particular one sixth to one tenth, of the amplitude of the absolute value of the vector (4,5,6).

7. Device (10) for detecting and separating metal-containing substances from products, in particular suitable for carrying out a process according to one of the preceding claims, comprising
- a metal detector (14) having a detection area through which products, e.g. foodstuffs, can be conveyed,
- an evaluation device for determining undesirable foreign substances in the products, which is designed to receive a measurement signal from the metal detector (14) when a product passes through the detection area,
- a discharge device (18) which can be controlled by the evaluation device as a function of the measurement signal and is designed to separate out a product detected as containing metal,
- the evaluation device having a teach-in circuit and a memory which are designed to store the phase and amplitude of at least one product specimen as a reference range in the form of a two-dimensional envelope curve (1) in a phase/amplitude coordinate system,
**characterized by**
- a reference value memory in which amplitude and phase values of differently sized metal test specimens are stored which form vectors (4, 5, 6) in the phase/amplitude coordinate system
- an input arrangement for inputting a setpoint size of metal foreign bodies as a detection limit in the products to be tested,
- the evaluation device further comprising a selection circuit designed to select as a reference quantity the vector (4, 5, 6) of that metal test body whose size is smaller than or equal to the setpoint size and whose distance from the target quantity is smallest,
- in that the evaluation device has an adaptation circuit which is designed to enlarge the reference range (1) in order to form a detection range (1a) by a factor (Y/x) corresponding to the ratio of the absolute value (Y) of the vector (4, 5, 6) of the selected metal test body to the extent (x) of the reference range in the direction of this vector (4, 5, 6), which enlargement takes place while maintaining the shape of the envelope curve (1) of the reference range (1),
- wherein the evaluation device comprises a comparison circuit designed to output a discharge signal for the separating device (10) depending on whether or not the measurement signal of a product lies within the detection range (1a).

8. Device according to claim 7, **characterized in that** the evaluation device is connected to a display (24) of the device and is designed to display the envelope curve (1) representing the reference range (1) on the display (24), and **in that** the evaluation device is designed to display the measurement signal of a product under test on the display (24) and to derive a metal foreign body signal when the closed envelope curve (1) is touched or exceeded by the product measurement signal.

9. Device according to claim 8, **characterized in that** the metal detector (14) is designed to excite the detection coil with at least two different frequencies.

10. Device according to any one of claims 7 to 9, **characterized in that** the
evaluation device comprises a calibration circuit which is designed to perform a calibration routine for calibrating the metal detector (14), which calibration circuit is designed to compare the measurement signal of a defined test body conveyed by the metal detector (14) with the stored values of the corresponding test body and to calculate therefrom an amplitude- and phase correction value (offset value) which are applied to the stored values of all test bodies.

11. Device according to any one of claims 7 to 10, **characterized in that** it includes a conveyor device (12) designed to transport the products through the detection area.

12. apparatus according to any one of claims 11, **characterized in that** the discharge device is formed by blow-out nozzles or a discharge plunger (18) which ejects material transversely to the conveying direction.

13. Device according to any one of claims 11 to 12, **characterized in that** the metal detector (14) and/or evaluation device has a delay circuit which takes into account the distance from the detection area to the discharge device (18) and the conveying speed when the discharge device (18) is actuated.

14. Device according to any one of claims 11 to 13, **characterized in that** the metal detector (14) contains, as at least one detection coil, at least one transmitter coil surrounding the conveying section (12) and two receiver coils surrounding the conveying section, which are arranged preferably upstream and downstream of the transmitter coil in the conveying direction.

15. Device according to any one of claims 7 to 14, **characterized in that** the input arrangement has an access guard.

## Revendications

1. Procédé destiné à éliminer des objets contenant du métal en utilisant au moins un détecteur de métal (14) qui présente une zone de détection à travers laquelle des produits, par exemple des aliments, sont transportés (12), dans lequel en fonction du signal de mesure (2) du détecteur de métal (14) un dispositif de déchargement (18) ou un processus de déchargement est initié pour éliminer un produit détecté comme contenant du métal, dans lequel les produits dans un dispositif d'exploitation du détecteur de métal (14) sont détectés comme contenant du métal lorsque le signal de mesure reçu à partir du produit dépasse au moins une valeur de référence, le signal de mesure (2) comprenant la phase et l'amplitude d'un signal de réponse en réponse à au moins un signal d'excitation qui est généré dans au moins une bobine de détection du détecteur de métal (14), lequel signal de réponse est traité sous la forme d'une enveloppe bidimensionnelle (1) dans un système de coordonnées de phase/amplitude,
dans lequel la phase et l'amplitude au moins d'un échantillon de produit sont mesurées et enregistrées en tant que zone de référence sous la forme d'une enveloppe bidimensionnelle (1) dans un système de coordonnées de phase/amplitude,
**caractérisé en ce que**
la valeur d'amplitude et de phase d'échantillons métalliques de tailles différentes est enregistrée dans le système de coordonnées de phase/amplitude pour former des vecteurs (4,5,6) de telle sorte qu'une taille de consigne de corps étrangers métalliques est prédéfinie comme limite de détection dans les produits à vérifier,
**en ce que** le vecteur (4,5,6) du corps d'essai métallique est sélectionné comme grandeur de référence dont la taille est inférieure ou égale à la taille de consigne et dont l'écart par rapport à la taille de consigne est le plus faible, **en ce qu'**une zone de détection (1a) de bons produits est formée par un élargissement de la zone de référence (1), laquelle est agrandie d'un facteur (Y/x) correspondant au rapport de la valeur absolue (Y) du vecteur (4,5,6) du corps d'essai métallique sélectionné sur l'étendue (x) de la zone de référence (1) en direction de ce vecteur (4,5,6), laquelle zone de détection (1a) forme une grandeur de référence pour faire la distinction entre les bons produits et les mauvais produits, dans lequel un produit est jugé comme un bon produit lorsque son signal de mesure se trouve à l'intérieur de la zone de détection (1a).

2. Procédé selon la revendication 1, **caractérisé en ce que**, dans une routine d'étalonnage destinée à étalonner le détecteur de métal (14), un échantillon défini, de préférence un échantillon en fer, est transporté à travers le détecteur de métal (14) et les signaux reçus sont comparés aux valeurs enregistrées de l'échantillon correspondant et, à partir de là, une valeur de correction d'amplitude et de phase (valeur de compensation) est calculée, qui sont appliquées aux valeurs enregistrées de tous les échantillons.

3. Procédé selon la revendication 2, **caractérisé en ce que** la routine d'étalonnage est effectuée pour chaque fréquence du détecteur de métal (14).

4. Procédé selon une des revendications précédentes, **caractérisé en ce que** l'entrée de la taille de consigne dans le détecteur de métal (14) est effectuée par accès protégé.

5. Procédé selon une des revendications précédentes, **caractérisé en ce que** le facteur prend en compte en plus une marge de sécurité (7).

6. Procédé selon la revendication 5, **caractérisé en ce que** la marge de sécurité (7) correspond d'un quart à un vingtième, en particulier d'un sixième à un dixième de l'amplitude de la valeur absolue du vecteur (4,5,6).

7. Dispositif (10) destiné à la détection et à l'élimination de matières contenant du métal à partir de produits, en particulier apte pour mettre en œuvre un procédé selon une des revendications précédentes, comprenant
- un détecteur de métal (14), qui présente une zone de détection, à travers laquelle des produits, par exemple des aliments, peuvent être transportés,
- un dispositif d'exploitation destiné à déterminer des matières étrangères non souhaitées dans les produits, lequel est conçu pour recevoir du détecteur de métal (14) un signal de mesure lors du passage d'un produit à travers la zone de détection,
- un dispositif de déchargement (18) qui peut être actionné par le biais du dispositif d'exploitation en fonction du signal de mesure et qui est conçu pour éliminer un produit détecté comme contenant du métal,
- dans lequel le dispositif d'exploitation présente un circuit d'apprentissage et une mémoire qui sont conçus pour enregistrer la phase et l'amplitude au moins d'un échantillon de produit en tant que zone de référence sous la forme d'une enveloppe bidimensionnelle (1) dans un système de coordonnées de phase/amplitude, **caractérisé par**
- une mémoire de valeurs de référence, dans laquelle des valeurs d'amplitude et de phase d'échantillon métalliques de tailles différentes sont enregistrées, formant des vecteurs (4,5,6) dans le système de coordonnées de phase/amplitude,
- un agencement d'entrée destiné à entrer une taille de consigne de corps étrangers métalliques comme limite de détection dans les produits à vérifier,
- dans lequel le dispositif d'exploitation présente en outre un circuit de sélection qui est conçu pour sélectionner le vecteur (4,5,6) de l'échantillon métallique comme grandeur de référence, dont la taille est inférieure ou égale à la taille de consigne et dont l'écart par rapport à la taille de consigne est le plus faible,
- en ce que le dispositif d'exploitation présente un circuit d'adaptation qui est conçu pour agrandir la zone de référence (1) afin de former une zone de détection (1a) autour d'un facteur (Y/x) correspondant au rapport de la valeur absolue (Y) du vecteur (4,5,6) de l'échantillon métallique sélectionné sur l'étendue (x) de la zone de référence en direction de ce vecteur (4,5,6), lequel agrandissement est effectué en conservant la forme de l'enveloppe (1) de la zone de références (1),
- dans lequel le dispositif d'exploitation présente un circuit de comparaison qui est conçu pour transmettre un signal d'élimination pour le dispositif d'élimination (10) en fonction du signal de mesure d'un produit s'il se trouve ou non à l'intérieur de la zone de détection (1a).

8. Dispositif selon la revendication 7, **caractérisé en ce que** le dispositif d'exploitation est relié à un affichage (24) du dispositif et est conçu pour représenter sur l'affichage (24) l'enveloppe (1) représentant la zone de référence (1), et **en ce que** le dispositif d'exploitation est conçu pour afficher sur l'affichage (24) le signal de mesure d'un produit se trouvant dans la vérification et en dériver un signal de corps étranger métallique, lorsque l'enveloppe fermée (1) est touchée ou dépassée par le signal de mesure du produit.

9. Dispositif selon la revendication 8, **caractérisé en ce que** le détecteur de métal (14) est conçu pour exciter la bobine de détection avec au moins deux fréquences différentes.

10. Dispositif selon une des revendications 7 à 9, **caractérisé en ce que** le dispositif d'exploitation présente un circuit d'étalonnage qui est conçu pour mettre en œuvre une routine d'étalonnage destinée à étalonner le détecteur de métal (14), lequel circuit d'étalonnage est conçu pour comparer le signal de mesure d'un échantillon défini transporté par le biais du détecteur de métal (14) aux valeurs enregistrées de l'échantillon correspondant et pour calculer, à partir de là, une valeur de correction d'amplitude et de phase (valeur de compensation) qui est appliquée aux valeurs enregistrées de tous les échantillons.

11. Dispositif selon une des revendications 7 à 10, **caractérisé en ce qu'**il comprend un dispositif de transport (12) qui est conçu pour transporter les produits à travers la zone de détection.

12. Dispositif selon la revendication 11, **caractérisé en ce que** le dispositif de déchargement est formé par des buses de soufflage ou par un piston de déchargement (18) qui éjecte le matériau transversalement à la direction de transport.

13. Dispositif selon une des revendications 11 à 12, **caractérisé en ce que** le détecteur de métal (14) et/ou le dispositif d'exploitation présente un circuit de temporisation qui prend en compte la trajectoire depuis la zone de détection jusqu'au dispositif de déchargement (18) et la vitesse de transport lors de l'actionnement du dispositif de déchargement (18).

14. Dispositif selon une des revendications 11 à 13, **caractérisé en ce que** le détecteur de métal (14) comprend comme au moins une bobine de détection au moins une bobine d'émission entourant la voie de transport (12) et deux bobines de réception qui entourent la voie de transport (12) et sont disposées dans la direction de transport de préférence en mont et en aval de la bobine d'émission.

15. Dispositif selon une des revendications 7 à 14, **caractérisé en ce que** l'agencement d'entrée présente une protection d'accès.
